# FASCICULE DE BREVET EUROPEEN

(11) **EP 0 521 807 B1**
(45) Date de publication et mention de la délivrance du brevet: **09.04.1997**
(21) Numéro de dépôt: 92450008.5
(22) Date de dépôt: 03.07.1992
(51) Int. Cl.: C12G 1/02

(54) **Dispositif d'aspersion intégrale de liquides chargés de matières solides en suspension**
Vorrichtung für die integrale Besprühung von suspendierten Feststoffen beladenen Flüssigkeiten
Device for the integral sprinkling of liquids containing suspended solids

(30) Priorité: 05.07.1991 FR 9108705
(43) Date de publication de la demande: 07.01.1993
(73) Titulaire: David, Gilbert, F-33000 Bordeaux (FR); David, Bruno, F-33560 Carbon Blanc (FR)
(72) Inventeur: David, Gilbert, F-33000 Bordeaux (FR); David, Bruno, F-33560 Carbon Blanc (FR)
(74) Mandataire: Trolliet, Jean-Claude

(56) Documents cités:
- EP-A- 0 315 555
- BE-A- 433 265
- US-A- 1 510 175

## Description

La présente invention concerne un dispositif pour l'aspersion intégrale de liquides chargés de matières solides en suspension de granulométrie appropriée, tels que chapeau de marc durant la vinification contenues dans une cuve généralement cylindrique ou parallélépipèdique pourvue d'une cheminée centrale ou d'une cheminée excentrée.

On connaît différents dispositifs d'aspersion pour l'arrosage de liquides chargés de matières solides en suspension de granulométrie appropriée tels que chapeau de marc flottant durant la vinification, notamment le dispositif décrit par le brevet FR 2 622 895 au nom des demandeurs qui consiste à puiser le liquide contenu en partie inférieure de la cuve et aprés sa remontée au moyen d'une pompe à le diffuser par l'intermédiaire d'un cône mobile disposé coaxialement dans le prolongement du conduit d'amenée, la variation du diamètre d'arrosage étant obtenue par la variation de la distance dudit cône par rapport à l'extrémité basse du conduit d'amenée, ladite variation étant obtenue par un vérin, ce type de diffuseur présente un inconvénient au niveau de la répartition du liquide d'aspersion, ladite répartition est non uniforme compte tenu de la descente ou remontée du cône qui s'effectue de façon continue et linéaire afin de pallier au phénomène dit du colmatage, cette aspersion est irrégulière au niveau de la quantité de liquide répartie sur la surface en un quelconque endroit ce qui crée des cheminements préférentiels du liquide au travers du chapeau.

On connaît aussi par le brevet 2 404 473 l'aspersion du marc au moyen d'une roue à ailettes disposée à l'avant de l'orifice de refoulement du liquide puisé dans la cuve, la roue à ailettes étant entrainée en rotation au moyen d'une turbine entrainée par le liquide lui-même ou au moyen d'un moteur électrique et d'un arbre, afin d'arroser l'intégralité de la surface du chapeau de marc il est nécessaire de faire varier la vitesse de rotation de la roue à ailettes, ce qui est délicat dans le cas où la roue est entraînée en rotation par l'intermédiaire d'un turbine elle-même sollicitée par le liquide, de même lorsque la roue est entraînée par un arbre et moteur électrique où il est nécessaire de faire varier la vitesse du moteur par paliers ce qui présente les mêmes inconvénients que précédemment exposés, il en est de même par la conception de la roue présentant des ailettes de différents diamètres où le résultat est tout à fait médiocre.

L'invention a pour but de pallier aux inconvénients précédemment exposés.

L'invention a pour objet un dispositif d'aspersion pour l'arrosage de liquides chargés de matières solides en suspension de granulométrie appropriée contenus dans une cuve tels que chapeau de marc durant la vinification au moyen d'un cône creux mobile verticalement pour une cuve ayant une cheminée centrale ou une cuve ayant une cheminée excentrée par un clapet articulé disposé à l'extrémité basse du conduit d'aménée de section constante, la variation des hauteurs du cône ou l'oscillation du clapet articulé étant obtenues de manière variable et continue au moyen d'une came rotative ou selon le diamètre ou dimension de la cuve l'oscillation du clapet articulé pouvant s'effectuer au moyen d'un vérin.

D'autres caractéristiques et avantages de l'invention ressortiront plus clairement de la description qui va suivre faite en regard des dessins joints donnés à titre d'exemple non limitatif, où :
- la figure 1 est une vue de profil du dispositif d'aspersion au moyen d'un cône, ce dernier étant positionné en partie haute,
- la figure 2, une vue de face du cône représenté figure 1 en position basse,
- la figure 3, une vue de profil du dispositif d'aspersion au moyen d'un clapet articulé pour une cheminée de cuve excentrée au moyen d'une came,
- la figure 4, le dispositif d'aspersion représenté figure 3, le clapet articulé d'aspersion étant positionné au moyen d'un vérin.
- la figure 5, une vue en plan d'un clapet rectangulaire, un des côtés aménagé d'arrondis.

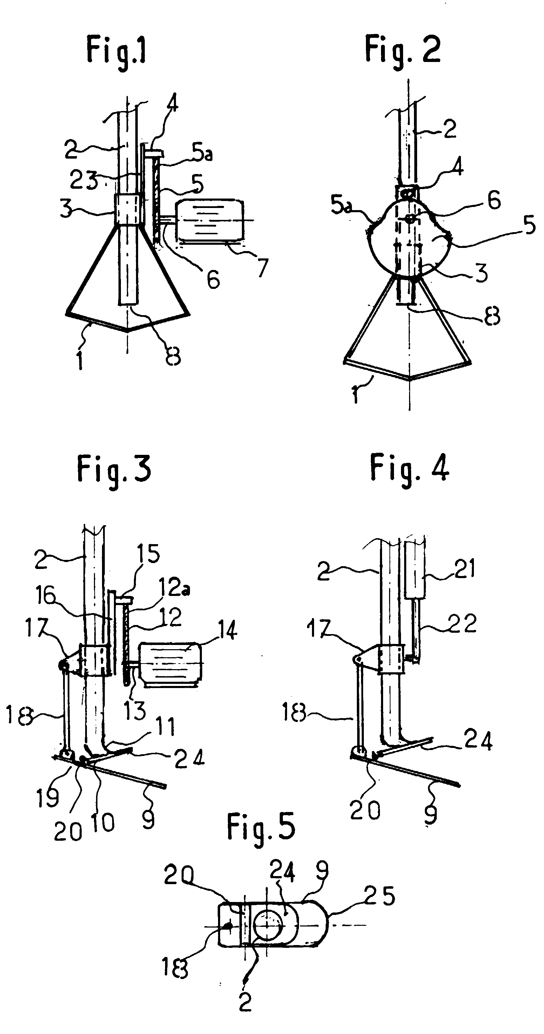

Tel que représenté figures 1 et 2, le cône 1, disposé en partie basse 8 du conduit de remontée 2 de section constante sur lequel il coulisse au moyen d'un manchon 3, est maintenu en hauteur au moyen d'un bras 23 pourvu d'un ergot saillant 4 en appui sur le pourtour 5a d'une came 5 solidaire d'un axe 6 relié à un moteur électrique 7 à vitesse constante ou variable de telle sorte que durant la rotation continue du moteur 7 et de ce fait de la came 5, cette dernière positionne ledit cône 1 à des hauteurs variables par rapport à la partie basse 8 du conduit 2 de section constante et ce afin d'asperger intégralement la surface du chapeau de marc contenu dans la cuve, selon la pression d'évacuation du liquide remonté et le pourtour 5a de la came 5 qui permet de faire varier la hauteur du cône 1 de manière continue selon des temps variables pour que le chapeau de marc recoive une quantité uniforme de liquide en un quelconque endroit de sa surface et ce afin de pallier à des cheminements préférentiels du liquide au travers dudit chapeau de marc.

Selon la représentation figure 3, dans le cas de cheminées de cuves excentrées, l'aspersion et la répartition du liquide remonté sur le chapeau de marc sont obtenues au moyen d'un clapet 9 articulé en 20 en partie basse 10 du conduit de remontée 2 de section constante, ladite partie basse 10 étant par rapport au conduit 2 en prolongement ou présente un coude 11 tel que représenté et la coupe de ladite extrémité est horizontale ou présente un angle pouvant varier de 0 à 20° tel que représenté, cette adaptation étant définie selon le diamètre de la cuve et la surface à asperger, la variation de la surface d'aspersion étant obtenue par l'oscillation du clapet 9 qui obture ou libère la partie basse 10 du conduit 2, la variation de l'angle d'ouverture est obtenue comme précédemment décrit au moyen du pourtour 12a approprié d'une came 12 solidaire d'un axe 13 relié à un moteur électrique 14 à vitesse constante ou variable, sur ledit pourtour 12a de ladite came 12 prend appui un ergot 15 solidaire d'un bras 16 relié à un manchon 17 coulissant sur le conduit 2, sur ledit manchon 17 est reliée une bielle 18 réglable en hauteur et reliée au talon 19 du clapet mobile 9 articulée en 20 au bas du conduit 2.

Sans sortir du cadre de l'invention l'oscillation du clapet mobile 9 peut avantageusement être obtenue au moyen d'un vérin 21 comme représenté figure 4, la variation du déplacement de la tige 22 dudit vérin 21 s'effectuant progressivement par paliers temporisés ou par variateur électronique afin de répartir de manière la plus uniforme possible le liquide sur la surface du chapeau de marc.

En la partie basse 10 du conduit 2 est disposée une plaque 24 présentant un pourtour de forme ovoïde ainsi que le clapet 9 de façon à répartir le liquide d'aspersion selon le profil de la section de la cuve. Comme représenté figure 5, le clapet 9 peut présenter une forme rectangulaire ayant le côté 25 opposé à l'articulation 20 en arrondi.

## Revendications

1. Dispositif d'aspersion intégrale de liquides chargés de matières solides en suspension de granulométrie appropriée contenus dans une cuve par le liquide contenu dans ladite cuve, remonté et diffusé au moyen d'un cône mobile verticalement pour une cuve ayant une cheminée centrale ou au moyen d'un clapet articulé pour une cuve ayant une cheminée excentrée, caractérisé en ce que la position verticale du cône (1) de diffusion par rapport à l'extrémité (8) du conduit de remontée (2) de section constante qui définit la surface d'arrosage suivant la pression de diffusion constante du liquide est variable de manière continue selon des temps variables au moyen d'une came rotative (5) entraînée par un moteur (7) à vitesse constante ou variable de sorte à répartir de manière uniforme une quantité de liquide en un quelconque endroit du chapeau ou par l'ouverture et fermeture en continu de l'extrémité basse (10) du conduit de remontée (2) au moyen de l'oscillation d'un clapet (9) articulé en (20) en la partie basse (10) du conduit, ladite oscillation à vitesse variable étant obtenue au moyen d'une came rotative (12) ou d'un vérin (21).

2. Dispositif d'aspersion intégrale de liquides chargés de matières solides en suspension contenus dans une cuve selon la revendication 1 caractérisé en ce que la position en hauteur du cône (1) coulissant sur le conduit (2) au moyen d'un manchon (3) est obtenue par un ergot saillant (4) en appui sur le pourtour (5a) de la came rotative (5), ledit ergot (4) étant solidaire d'un bras (23) fixé au manchon (3).

3. Dispositif d'aspersion intégrale de liquides chargés de matières solides en suspension contenus dans une cuve selon la revendication 1 caractérisé en ce que l'oscillation à vitesse variable du clapet (9) articulé en (20) en la partie basse (10) provoquant l'ouverture ou la fermeture en continu de l'extrémité basse (10) du conduit (2) de remontée est obtenue par une bielle (18) reliant le talon (19) du clapet (9) et le manchon (17) coulissant sur le conduit de remontée (2), le déplacement du manchon (17) étant provoqué par un bras (16) solidaire dudit manchon (17) pourvu d'un ergot saillant (15) en appui sur le pourtour (12a) d'une came (12) entraînéepar un moteur (14), ou ledit déplacement du manchon (17) est provoqué par un vérin (21) dont la tige (22) est reliée audit manchon coulissant (17).

4. Dispositif d'aspersion intégrale de liquides chargés de matières solides en suspension contenus dans une cuve selon les revendications 1 et 3 caractérisé en ce que l'extrémité (10) du conduit (2) de remontée présente un angle compris entre 0° et 20° selon le diamètre de la cuve et la surface à arroser.

5. Dispositif d'aspersion intégrale de liquides chargés de matières solides en suspension contenus dans une cuve selon les revendications 1 et 3 caractérisé en ce qu'en extrémité (10) du conduit (2) est disposée une plaque (24) présentant un pourtour de forme ovoide ainsi que le clapet (9) et/ou un pourtour rectangulaire ayant l'extrémité (25) opposée à l'articulation (20) de forme arrondie.

## Patentansprüche

1. Vorrichtung zum vollständigen Versprühen von Flûssigkeiten, die mit suspendierten Feststoffen geeigneter Granulometrie angereichert sind, die sich durch die in einem Faß enthaltene Flüssigkeit in dem selben Faß befinden, wobei die Flüssigkeit für ein Faß mit Zentralschacht mittels eines vertikal mobilen Konus bzw. für ein Faß mit exzentrischem Schacht mittels eines Klappventils nach oben befördert und versprüht wird; diese Vorrichtung ist dadurch gekennzeichnet, daß die Vertikalstellung des Sprühkonus (1) im Verhältnis zum unteren Ende (8) des Aufstiegrohrs (2) mit konstantem Quershnitt, das die Besprühungsfläche gemäß dem konstanten Zerstäubungsdruck der Flüssigkeit bestimmt, variabel ist, und zwar kontinuierlich gemäß variabler Arbeitstakte durch eine von einem Motor (7) mit konstanter Geschwindigkeit betriebene Drehnocke (5), oder insofern variabel, daß auf gleichmäßige Weise eine Flüssigkeitsmenge an eine beliebige Stelle des Tresterhutes verteilt wird, oder durch ständiges Öffnen und Schließen des unteren Endes (10) des Aufstiegsrohrs (2) mittels Oszillation eines Ventils (9), das bei (20) im unteren Rohrteil (10) mit einem Gelenk versehen ist, wobei die besagte Oszillation bei variabler Geschwindigkeit mittels einer Drehscheibe (12) oder eines Zylinders (21) erzielt wird.

2. Vorrichtung gemäß Anspruch 1 zum vollständigen Versprühen von Flüssigkeiten, die mit suspendierten Feststoffen geeigneter Granulometrie angereichert und in einem Faß enhalten sind, welche dadurch gekennzeichnet ist, daß die obere Endstellung des Konus (1), der mittels einer Hülse (3) über das Rohr (2) gleitet, durch einen herausragenden Nocken (4) erzielt wird, der auf den äußeren Umfang (5a) der Drehscheibe (5) drückt, wobei dieser Nocken (4) Teil eines Arms (23) bildet, der an der Hülse (3) befestigt ist.

3. Vorrichtung gemäß Anspruch 1 zum vollständigen Versprühen von Flüssigkeiten, die mit suspendierten Feststoffen geeigneter Granulometrie angereichert und in einem Faß enthalten sind, welche dadurch gekennzeichnet ist, das die Oszillation bei variabler Geschwindigkeit des Ventils (9), das bei (20) im unteren Teil (10) mit einem Gelenk versehen ist und das ständige Öffnen und Schließen des unteren Endes (10) von Rohr (2) bewirkt, durch eine Stange (18) erzielt wird, die die Nase (19) des Ventils (9) und die über das Aufstiegsrohr (2) gleitende Hülse (17) verbindet, wobei die Bewegung der Hülse (17) durch einen Arm (16) bewirkt wird, der Teil dieser Hülse (17) bildet und der mit einem herausragendem Nocken (15) versehen ist, der auf den äußeren Umfang (12a) einer von einem Motor (14) betriebenen Drehnocke (12) drückt, oder die besagte Bewegung der Hülse (17) durch einen Zylinder (21) bewirkt, dessen Schaft (22) mit dieser Gleithülse (17) verbunden ist.

4. Vorrichtung gemäß Ansprüche 1 und 3 zum vollständigen Versprühen von Flüssigkeiten, die mit suspendierten Feststoffen geeigneter Granulometrie angereichert und in einem Faß enthalten sind, welche dadurch gekennzeichnet ist, daß das äußere Ende (10) des Aufstiegrohrs (2) einen Winkel aufweist, der je nach Faßdurchmesser und zu besprühender Fläche zwischen 0° und 20° beträgt.

5. Vorrichtung gemäß Ansprüche 1 und 3 zum vollständigen Versprühen von Flüssigkeiten, die mit suspendierten Feststoffen geeigneter Granulometrie engereichtert und in einem Faß enthalten sind, welche dadurch gekennzeichnet ist, daß am äußeren Ende (10) des Rohres (2) eine Platte (24) angebracht ist, die einen ovalen Außenumfang aufweist, ebenso wie das Ventil (9), und/oder einen rechteckigen Außenumfang, dessen äußeres Ende (25), das dem Gelenk (20) gegenüberliegt, eine abgerundete Form hat.

## Claims

1. Apparatus for the integral sprinkling of liquids laden with solid materials in suspension, of appropriate granulometry, contained in a vat, with the liquid contained in the said vat, returned and diffused by means of a vertically movable cone, for a vat having a central chimney, or by means of a hinged flap valve for a vat having an off-center chimney, characterized in that the vertical position of the diffusion cone (1) with respect to the end (8) of the return pipe (2) of constant section which defines the sprinkling surface according to the constant diffusion pressure of the liquid is variable in a continuous manner according to cycles variable by means of a rotatory cam (5) driven by a constant or variable speed motor (7) so as to uniformly distribute a quantity of liquid at any point on the blanket or by the continual opening and closing of the bottom end (10) of the return pipe (2) by means of the oscillation of a flop valve (9) fulcrumed at (20) on the bottom part (10) of the pipe, the said variable-speed oscillation being obtained by means of a rotary cam (12) or of a jack (21).

2. Apparatus for the integral sprinkling of liquids laden with solid materials in suspension contained in a vat in accordance with claim 1 characterized in that the level of the cone (1) sliding on the pipe (2) by means of a sleeve (3) is obtained by a projection (4) resting on the periphery (5a) of the rotary cam (5), the said projection (4) being affixed to an arm (23) affixed to the sleeve (3).

3. Apparatus for the integral sprinkling of liquids laden with solid materials in suspension contained in a vat in accordance with claim 1, characterized in that the variable-speed oscillation of the valve (9) fulcrumed at (20) at the bottom (10), producing the continual opening or the closing of the bottom end (10) of the return pipe (2) is obtained by a rod (18) connecting the heel (19) of the valve (9) and the sleeve (17) sliding on the return pipe (2), the movement of the sleeve (17) being produced by an arm (16) affixed to the said sleeve (17) provided with a projection (15) resting on the periphery (12a) of a cam (12) driven by a motor (14), or the said movement of the sleeve (17) is produced by a jack (21) whose plunger (22) is connected to the said sliding sleeve (17).

4. Apparatus for the integral sprinkling of liquids laden with solid materials in suspension contained in a vat in occordance with claims 1 and 3, characterized in that the end (10) of the return pipe (2) presents an angle comprised between 0° and 20° according to the diameter of the vat and the area to be sprinkled.

5. Apparatus for the integral sprinkling of liquids laden with solid materials in suspension contained in a vat in accordance with claims 1 and 3, characterized in that at the end (10) of the return pipe (2) there is disposed a plate (24) having a contour of ovoid shape, as well as the flap valve (9), and/or a rectangular contour having the end (25) opposite the fulcrum (20) of rounded shape.
